# EUROPEAN PATENT SPECIFICATION

(11) **EP 2 415 296 B1**
(45) Date of publication and mention of the grant of the patent: **29.08.2018**
(21) Application number: 10739080.9
(22) Date of filing: 03.02.2010
(51) Int. Cl.: H04W 4/24, H04M 15/00, H04W 88/14

(54) **HOME-ZONE IDENTIFICATION**
IDENTIFIKATION VON HEIMBEREICHEN
IDENTIFICATION DE ZONE DE RATTACHEMENT

(30) Priority: 03.02.2009 US 149631 P
(43) Date of publication of application: 08.02.2012
(73) Proprietor: Nextivity, Inc., San Diego, CA 92128 (US)
(72) Inventor: LOTTER, Michiel, San Diego, CA 92128 (US); MOHEBBI, Behzad, San Diego, CA 92128 (US); BOTHA, Louis, San Diego, CA 92128 (US); THOMPSON, Marco, San Diego, CA 92128 (US)
(74) Representative: Ertl, Nicholas Justin
(86) International application number: PCT/US2010/023092
(87) International publication number: WO 2010/091114

(56) References cited:
- EP-A1- 1 971 177
- WO-A1-00/01171
- JP-A- H07 193 533
- US-A1- 2004 224 682
- US-A1- 2007 060 200
- US-A1- 2007 060 200
- US-A1- 2007 184 815
- US-A1- 2008 205 261
- US-A1- 2008 205 261
- US-B1- 6 671 506
- US-B1- 6 671 506

## Description

### BACKGROUND

Existing cellular networks, such as (Global System for Mobile Communications (GSM) and IS95, are intended to enable contagious and continuous coverage to support the high terminal mobility expected from such systems. However, despite careful network design, indoor (in-building) coverage or the coverage of places with high shadowing attenuation (e.g. tunnels) of such networks is often "patchy", with "coverage holes" at best, and no coverage at worst. Impaired indoor coverage occurs because the cellular base stations are usually placed outside buildings, higher than the average building heights, to cover large areas. The signal may be adequate at "street-level", but is severely attenuated by the building materials, reducing the signal power in-building and resulting in the poor coverage. Loss of signal power (attenuation) depends on the building composition and can be tens of dBs for each wall penetration. The problem is exacerbated in the 3.sup.rd generation systems such as Wideband Code Division Multiple Access (WCDMA) and cdma2000 that have high data transmission capability, which results in lower information bit energy (E.sub.b), and much reduced link budget and cell footprint. Currently, common solutions enabling indoor coverage include (1) adding more outdoor base stations in the same geographical area thus supporting smaller cell sizes, (2) microcells, (3) picocells (in-building cells), and (4) conventional repeaters for usage in boosting signal over a selected geographical area.

Other than the conventional repeater, the various solutions are expensive, involve extensive investment in the cellular network infrastructure, and are complex in planning and operation.

The conventional repeater, although less expensive than a base station, has several drawbacks. Outdoor repeaters remain too expensive for a private user, and involve careful planning. Many repeaters use large directional antennas or support additional backhaul frequencies to reduce antenna gain specifications, which results in lower spectral efficiency and capacity limitations. Conventional repeaters tend to transmit the maximum allowed transmit power and often cause increased interference in the network and accordingly may be unsuitable for network operators. Indoor repeaters are less expensive than outdoor repeater versions, but typically involve installation of high directional antennas on the roof, and ensured antenna isolation, creating costly demand for skilled installation and operation. Therefore, the system generally remains too complicated for an unskilled user and not sufficiently inexpensive for usage in a much localized coverage area. A two-way wireless repeater and booster system is known from document US 2008/0205261 A1.

### SUMMARY

Embodiments of a communication apparatus detect user equipment transmissions in the coverage area of a repeater, for example by detecting presence of mobile communications at a home location and recording duration of user equipment activity in the repeater coverage area. The invention is set out in the appended set of claims. The embodiments and/or examples of the following description which are not covered by the appended claims are considered as not being part of the present invention.

### BRIEF DESCRIPTION OF THE DRAWINGS

Embodiments of the invention relating to both structure and method of operation may best be understood by referring to the following description and accompanying drawings:
**FIGURE 1** is a schematic block diagram depicting an example embodiment of a smart repeater in the form of a three-hop cellular repeater (Cel-Fi);
**FIGURE 2** is a schematic block diagram showing an example embodiment of a Universal Mobile Telecommunications System (UMTS) network with added functional blocks for Home-Zone services and billing;
**FIGURE 3** is a schematic block diagram showing an example embodiment of a smart repeater with Removable Flash for communicating with a network attached to a network unit to record and extract activation time information;
**FIGURE 4** is a schematic block diagram showing an example embodiment of a smart repeater with Removable SimCard and application SW attached to a network unit for communicating with a network;
**FIGURE 5** is a schematic block diagram showing an example arrangement with a Cel-Fi SimCard in user equipment for communicating with a network;
**FIGUREs 6A****,** **6B,** and **6C** are schematic block diagrams showing a system and usage of an example embodiment of a smart repeater (Cel-Fi) with embedded SimCard and application software for communicating with a network which is attached to a network unit and with a Bluetooth unit attached to the user unit to record and extract activation time information;
**FIGURE 7A** is a schematic block diagram showing an example embodiment of a smart repeater (Cel-Fi) with inserted NodeB waveform for communicating with a network; and
**FIGURE 7B** is a schematic block diagram illustrating an example usage for embodiment of a smart repeater (Cel-Fi) with inserted NodeB waveform for communicating with a network.

### DETAILED DESCRIPTION

The cellular industry continuously attempts to improve the indoor coverage of 3G and 4G systems to meet the rising customer expectation for better voice services and high data-rate service requirements. Thus, many solutions such as Femtocells, 3G-router, and smart repeaters have been developed to address indoor coverage improvements. One such device is a three-hop cellular booster (referred to hereinafter as "Cel-Fi") which is described in detail in patent applications no. WO2005025078 by Mohebbi, filed on 3^{rd} of September 2003 and WO2005069249 by Mohebbi filed on 12 of January 2004. The Cel-Fi is an example of "smart repeater" for usage in a WCDMA system. However, the ideas and embodiments described herein are not limited to the described 3-hop repeater (Cel-Fi), and thus can be used for any indoor device including a booster, repeater, a router, a Femtocell, and the like. Neither is the disclosure limited to WCDMA system, and with appropriate modifications, can be applied to any type of cellular or wireless system.

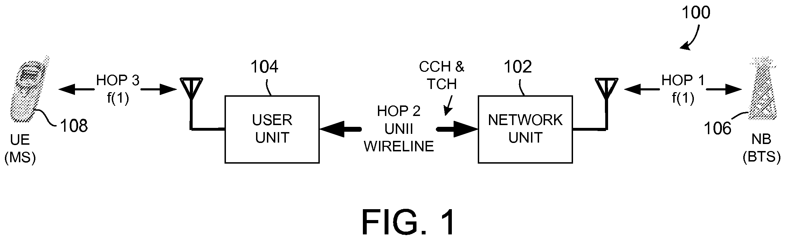

Referring to **FIGURE 1****,** an example of a smart repeater **100** is shown. The illustrative smart repeater **100** can be a Cel-Fi, a 3-hop repeater with a middle hop (hop 2) operating in wireless mode in UNII band. In other examples, the middle hop (hop 2) can be over a wire-line such as CAT5, electricity or telephone lines. The middle hop (hop 2) is an "autonomous" hop in that the waveform, bandwidth, and the signaling content is somewhat different from hop 1 that exists between Network unit **102** and Base Transceiver Station (BTS) **106,** and hop 3 that exists between User unit **104** and the Mobile Station (MS) **108.** The difference in signal characteristics can be due to modulation and/or the control channels that exist between the Network unit **102** and the User unit **104.** The waveform and bandwidth are changed to modulate the original signal such that the fading in the middle hop (hop 2) can be mitigated by the use of broadband modulation techniques such as Orthogonal Frequency-Division Multiplexing (OFDM), so that the repeated signal is only subject to two fading hops (hops 1 and 3), or to enable transmission of the captured cellular waveform in a digital mode over wire-line and exchanging control messages. An additional hop that imposes yet another fading pattern (Rayleigh or Rician) on the original signal can degrade the end signal considerably and push the required fading margins on all three hops sufficiently high, to render the repeater ineffective. The middle hop contains a bi-directional link including at least two channels, the "Control" (CCH) and "Traffic" (TCH) channels.

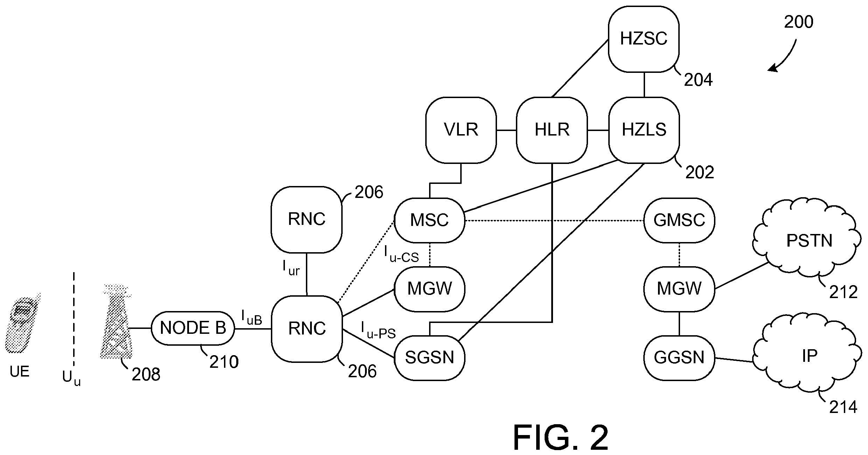

Emerging devices such as Cel-Fi improve and extend the indoor coverage of cellular systems such as WCDMA (UMTS), resulting in an increasing desire by the operator to price differentiate between ordinary mobile calls and calls that are made from a predefined indoor location such as the subscriber residential home. "Home-Zone Billing" (HZB) enables a cellular operator to encourage subscribers to use cellular services at home and eventually relinquish landline phones in favor of their cell phones. To be able to offer Services such as HZB, a cellular network may require new functional entities that interwork with the current network entities such as Mobile Switching Center (MSC) and Home Location Register (HLR). An example of an HZB-enabled cellular network **200** is shown in **FIGURE 2****,** which includes two new functional blocks, "Home-Zone Location Server" (HZLS) **202** and "Home-Zone Service Client" (HZSC) **204.** A task of HZLS **202** is establishment of the presence of a subscriber in the "Home-zone" which may be enabled using a new application element, based on an available services such as Short Message Service (SMS) supported by packet or circuit switched bearer services. The new application element also verifies and monitors calls/sessions durations of a subscriber within in the subscriber's "Home-Zone". The monitored information is then passed to HZSC **204,** where a database exists for collecting the information supplied by HZLS **202** and generates appropriate billing information. The example network shown in **FIGURE 2** is based on existing 3GPP (WCDMA) Location-Based Services (LCS) architecture, and is used only as an example for purposes of illustration. HZLS **202** and HZSC **204** are added to the architecture to enable the Home-Zone services and billing functionality. Other networks, with major variations or minor modifications, can still support the novel system disclosed herein. The home-zone identification structures and operation are unrelated to details of the HBZ so that detail modifications of network elements and functionalities for support of the HBZ need not be described herein. HZB can be considered as an extension of Location-Based Services, using the existing network elements after the appropriate modifications.

The example network **200** shown in **FIGURE 2** includes, in addition to the HZLS **202** and HZSC **204,** Radio Network Controllers (RNC) **206** that connect to a Base Transceiver Station (BTS) **208** through a node **210.** In the example configuration, the RNC **206** can communicate via networks such as Public Switched Telephone Network (PSTN) **212,** Internet Protocol (IP) **124,** and other networks through functional blocks including Global System for Mobile Communications (GMSC), Media Gateway (MGW), Gateway GPRS Support Node (GGSN), Mobile Switching Center (MSC), Service GPRS support node (SGSN), and other blocks.

A smart repeater **200** such as Cel-Fi can be configured to detect User Equipment (UE) transmissions (on the uplink) in a coverage area. Thus the presence of mobile at home can be detected and the duration of the UE(s) activity in the coverage area of a given Cel-Fi recorded. The activity information can then be used to bill the Cel-Fi user according to home-zone usage and tariffs. Several ways of recording and extracting the "Cel-Fi activation time" information from a given Cel-Fi unit can be implemented.

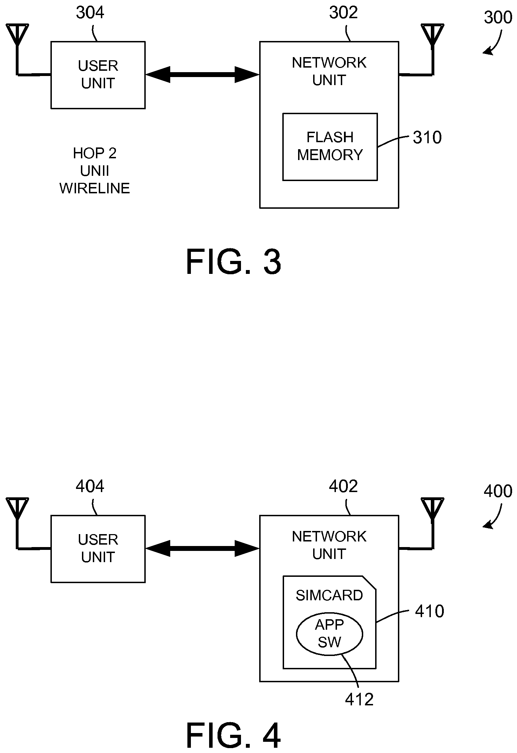

Referring to **FIGURE 3****,** a smart repeater with Removable Flash can be attached to a network unit to record and extract activation time information. The information can be saved on a removable flash memory **310** that can later be removed and taken to the operator agents for further processing. **FIGURE 3** shows an example of an arrangement **300** with Flash memory **310** attached to the Network Unit **302.** In other implementations, flash memory can alternately be attached to the User Unit **304.**

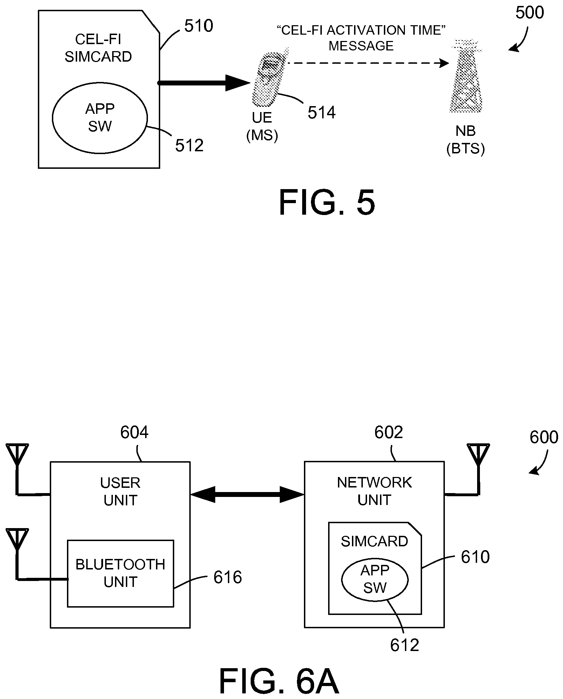

Referring to **FIGURE 4****,** a smart repeater with Removable Flash **410** can be attached to a network unit **402** to record and extract activation time information. A Subscriber Identity Module (SIM) card **410** (an embedded SIM card) with appropriate software **412** can be embedded within a smart repeater (Cel-Fi) **400.** "Cel-Fi activation time" information can then be saved on the SIM card **410** inside the Cel-Fi **400.** **FIGURE 4** shows an example of such arrangement with SimCard **410** attached to the network unit **402.** In another configuration, the SimCard can be attached to the user unit **404.** As shown in **FIGURE 5****,** in an example configuration **500** the SIM card **510** can then be removed from Cel-Fi and placed inside user equipment (UE) **514,** in place of the subscriber SIM, after which the SIM **510** (through operation of application software **512**) automatically sets up a bearer services (e.g. SMS) with the network and transfers the "Cel-Fi activation time" information to the appropriate entity (HZLS in **FIGURE 2**) in the network.

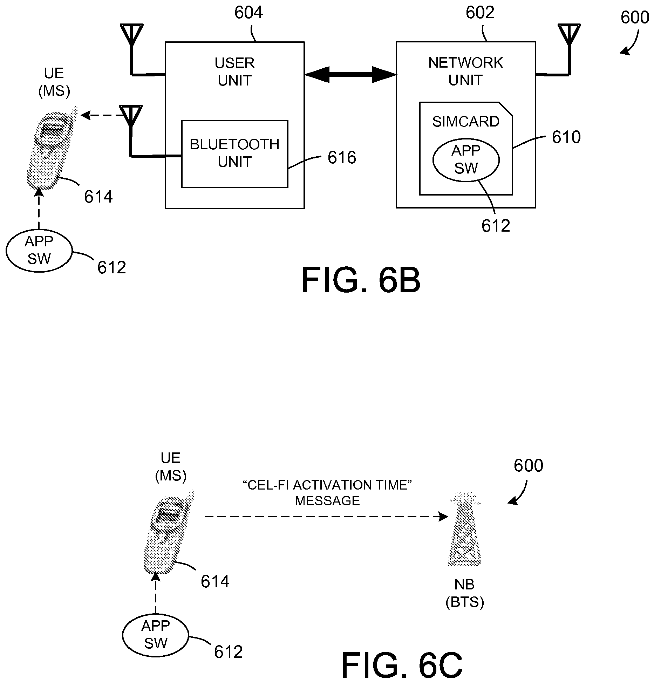

Referring to **FIGUREs 6A****,** **6B,** and **6C** are schematic block diagrams showing a repeater and usage for an example embodiment of a smart repeater (Cel-Fi) **600** with embedded SimCard **610** and application software **612** which is attached to a network unit **602** and with a Bluetooth unit **616** attached to the user unit **604.** The smart repeater **600** is configured for communicating with a network. The SimCard **610,** application software **612,** and Bluetooth unit **616** are configured to record and extract activation time information. The SIM card **610** (or flash memory) and the Bluetooth (or WiFi) transceiver **616** with appropriate software **612** and applications are embedded within the Cel-Fi **600.** As shown in **FIGUREs 6B** and **6C****,** the recorded "Cel-Fi activation time" information on the SIM **610** can then be transferred to user equipment (UE) **614** via the Bluetooth transceiver **616,** after pairing of the user equipment **614** and the Cel-Fi Bluetooth **616** devices. The user equipment **614,** which runs installed application software **612** for HZLS and Bluetooth communications, relays monitored Home-Zone call/session duration information to the appropriate network entity (HZLS in **FIGURE 2**) via an appropriate bearer service such as SMS or packet data channel or even a circuit-switched voice channel.

In other configurations or operations, the Bluetooth unit **616** in the smart repeater (Cel-Fi) **600** can be used to establish the location of user equipment **614** within or near a Cel-Fi footprint, for example by using a "discovery" mode of the Bluetooth only. Once a user equipment Bluetooth unit has discovered the presence of the smart repeater (Cel-Fi) Bluetooth signal, the user equipment **614** continues to monitor Cel-Fi presence. The "detection" and discovery information can either be used to notify the network that the user equipment **614** is at home and/or identifying (tagging) any calls made while the Cel-Fi Bluetooth signal is present as a Home-Zone call and recording the tagged calls in the handset or instantly inform the network. If recorded, the handset can later relay the information to an appropriate network entity (HZLS in **FIGURE 2**) via an appropriate bearer service such as SMS or packet data channel or even a circuit-switched voice channel. A user-interface indication on the user equipment **614** or Cel-Fi **600** can also inform the user that the calls are treated as "Home-zone" calls.

Cel-Fi Bluetooth transmissions (used for the options illustrated and described with respect to **FIGUREs 6A****,** **6B,** and **6C**), can be set to maximum defined power which is 20 dBm for Bluetooth class 1 (or set to max power of other classes). In other configurations or operations, the transmit power can be adjusted to a level to match the coverage area of the User units. The power matching enables more accurate location estimation.

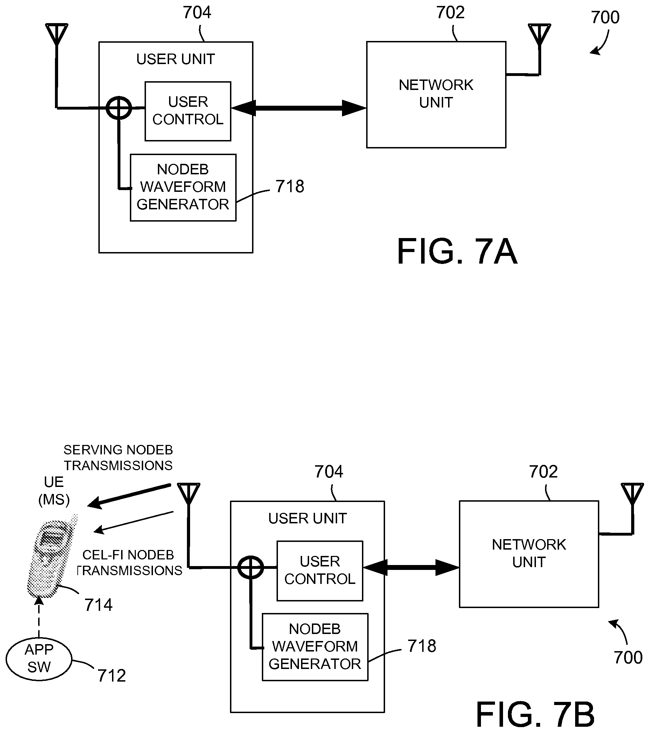

Referring to **FIGURE 7A****,** a schematic block diagram shows an example embodiment of a smart repeater (e.g. Cel-Fi) **700** with an inserted NodeB waveform for communicating with a network. In a further method, a NodeB composite system waveform (used to detect a base station transmission by user equipment) is inserted on the downlink signal of the smart repeater (Cel-Fi) **700** at the User unit **704** or Network unit **702.** For example, the composite waveform can be made up of primary and secondary Synchronization Channel (SCH), Common Pilot Channel (CPICH) and Primary Dedicated Physical Control Channel (P-DPCCH) with a unique scrambling code for Cel-Fi. P-DPCCH can be programmed to broadcast a predefined message related to the Cel-Fi identifier. The level in which the waveform is inserted is to be sufficiently low that an unacceptable level of distortion (EVM) is not generated in the repeated signal, but also sufficiently high to be detected, demodulated and measured (e.g. -18dB). The composite waveform can be generated by a NodeB generation block **718** shown in **FIGURE 7A****.**

Various methods can be used to determine whether a call is placed to the home zone.

One example method can be NodeB based. Referring again to **FIGURE 2****,** NodeBs **210** and the network **200** are aware of the Cel-Fi assigned scrambling codes. When a call is set up, the serving Node B **210** requests a received signal code power (RSCP) measurement on Cel-Fi assigned scrambling codes. If the call is placed in the proximity of a Cel-Fi, the CPICH RSCP will be sufficiently strong to be detected by the handset and reported to the serving NodeB **210** as being at "Home-Zone", resulting in the call being tagged as "Home Zone" and HZLS **202** informed accordingly.

Another example method can be user equipment based. Referring to **FIGURE 7B****,** a schematic block diagram depicts operation of an embodiment of a smart repeater (e.g. Cel-Fi) **700** with an inserted NodeB waveform for communicating with a network. A handset **714** can have a software application **712** that checks RSCP on Cel-Fi-assigned scrambling codes. If a scrambling code with an acceptable RSCP is detected, the user equipment **714** is assumed to be within the Home zone and the user equipment **714** will inform the network (HZLS **202** in **FIGURE 2**), via an appropriate bearer service such as SMS or packet data channel or even a circuit-switched voice channel, of the user equipment's **714** home location and can be billed accordingly, for example.

Assignments of the described scrambling codes to Cel-Fi can be based on several different strategies.

Assignment of the codes can be random wherein Cel-Fi identity can be established via P-DPCCH messages and hard coded at the factory.

Assignment of the codes can be dynamic wherein the first in-home call identifies the selected scrambling code of Cel-Fi. A complementary Cel-Fi identity can be established via P-DPCCH messages, hard coded at the factory.

Other assignment of the codes can be implemented.

Terms "substantially", "essentially", or "approximately", may be used herein, and relate to an industry-accepted tolerance to the corresponding term. Such an industry-accepted tolerance ranges from less than one percent to twenty percent and corresponds to, but is not limited to, functionality, values, process variations, sizes, operating speeds, and the like. The term "coupled", as may be used herein, includes direct coupling and indirect coupling via another component, element, circuit, or module where, for indirect coupling, the intervening component, element, circuit, or module does not modify the information of a signal but may adjust its current level, voltage level, and/or power level. Inferred coupling, for example where one element is coupled to another element by inference, includes direct and indirect coupling between two elements in the same manner as "coupled".

The illustrative block diagrams and flow charts depict process steps or blocks in a manufacturing process. Although the particular examples illustrate specific process steps or acts, many alternative implementations are possible and commonly made by simple design choice. Acts and steps may be executed in different order from the specific description herein, based on considerations of function, purpose, conformance to standard, legacy structure, and the like.

While the present disclosure describes various embodiments, these embodiments are to be understood as illustrative and do not limit the claim scope. Many variations, modifications, additions and improvements of the described embodiments are possible. For example, those having ordinary skill in the art will readily implement the steps necessary to provide the structures and methods disclosed herein, and will understand that the process parameters, materials, and dimensions are given by way of example only. The parameters, materials, and dimensions can be varied to achieve the desired structure as well as modifications, which are within the scope of the claims. Variations and modifications of the embodiments disclosed herein may also be made while remaining within the scope of the following claims.

## Claims

1. A communication apparatus comprising:
a three-hop repeater (100) configured to detect user equipment transmissions in a repeater coverage area that detects presence of mobile communications at a home location and records duration of user equipment activity in the repeater coverage area, the three-hop repeater comprising:
a user unit (104); a network unit (102) communicatively coupled to the user unit and configured to receive a downlink signal; and **characterised by** a NodeB waveform generator (718) coupled to at least one of the user unit (104) and the network unit (102), the NodeB waveform generator (718) configured to generate a waveform including a scrambling code associated with the three-hop repeater and for insertion on the downlink signal of the three-hop repeater to form a composite waveform for detecting a base station (106) transmission by user equipment;
wherein the user unit (104) is configured to transmit the composite waveform including the scrambling code inserted on the downlink signal to the user equipment (108).

2. The apparatus according to Claim 1 further comprising:
the three-hop repeater configured to make user equipment activity information available for billing according to home-zone usage and tariffs, the three-hop repeater further comprising:
a removable flash memory (310) coupled to at least one of the user unit and the network unit wherein the three-hop repeater is configured to save the user equipment activity information on the removable flash memory that can be made available to a home-zone network entity for processing.

3. The apparatus according to Claim 1 further comprising:
the three-hop repeater configured to make user equipment activity information available for billing according to home-zone usage and tariffs, the three-hop repeater further comprising:
a Subscriber Identity Module, SIM, card (410,510) coupled to at least one of the user unit and the network unit; and
software (412,512) loaded onto the SIM card (410,510) configured to save the user equipment activity information on the SIM card for transfer to a home-zone network entity.

4. The apparatus according to Claim 1 further comprising:
the three-hop repeater configured to make user equipment activity information available for billing according to home-zone usage and tariffs, the three-hop repeater further comprising:
a Bluetooth transceiver (616) coupled to at least one of the user unit and the network unit; and
software operative in combination with the Bluetooth transceiver configured to communicate the user equipment activity information to user equipment which performs home-zone location server and Bluetooth communications functionality and relays the equipment activity information to a home-zone network entity.

5. The apparatus according to Claim 1 further comprising:
the three-hop repeater configured to make user equipment activity information available for billing according to home-zone usage and tariffs, the three-hop repeater further comprising:
a Bluetooth transceiver (616) coupled to at least one of the user unit and the network unit configured to establish location of user equipment within a repeater footprint using Bluetooth discover mode for monitoring and identifying home-zone calls, and transferring monitored information to a home-zone network entity.

6. The apparatus according to Claim 1 wherein the composite waveform comprises a physical control channel with a unique scrambling code; and/or wherein the physical control channel comprises a predefined message related to a three-hop repeater identifier.

7. A method for managing communications comprising the following steps performed by a three-hop repeater:
detecting user equipment (108) transmissions in a repeater coverage area of the three-hop repeater (100); generating by a NodeB waveform generator of the three-hop repeater a waveform for insertion on a downlink signal of the three-hop repeater to form a composite waveform for detecting a base station (106) transmission by user equipment, wherein a user unit (104) of the three-hop repeater is configured to transmit the composite waveform to the user equipment and the waveform including a scrambling code associated with the three-hop repeater;
detecting presence of mobile communications at a home location; and
recording duration of user equipment activity in the repeater coverage area.

8. The method according to Claim 7 further comprising:
determining whether a call is placed in a home zone comprising:
during call set-up, operating a network node to request a received signal code power, RSCP, measurement on repeater-assigned scrambling codes;
for an RSCP measurement sufficiently strong to be detected at a handset, reporting to a serving node that a call is home-zone; and
informing a home zone location server of the home-zone call.

9. The method according to Claim 7 further comprising:
determining whether a call is placed in a home zone comprising:
at a handset, checking received signal code power, RSCP, on repeater-assigned scrambling codes;
for a detected scrambling code with predetermined acceptable RSCP, identifying user equipment as being in home-zone; and
informing a home zone location server of the home-zone call.

10. The method according to Claim 7 further comprising:
assigning scrambling codes to a repeater comprising randomly assigning repeater identity for factory hard-coding or dynamically assigning codes wherein a first in-home call identifies a scrambling code selected for the repeater and a complementary repeater identity is established for factory hard-coding.

11. The method according to Claim 7 further comprising:
making user equipment activity information available for billing according to home-zone usage and tariffs; and
saving the user equipment activity information selected from a group consisting of:
saving the user equipment activity information on a removable flash (310) that can be made available to a home-zone network entity for processing;
saving the user equipment activity information on a Subscriber Identity Module, SIM, card (410,510) for transfer to a home-zone network entity; and
communicating the user equipment activity information to user equipment which performs home-zone location server and Bluetooth communications functionality and relays the equipment activity information to a home-zone network entity.

12. The method according to Claim 7 further comprising:
establishing location of user equipment within a repeater footprint using Bluetooth discover mode for monitoring and identifying home-zone calls; and
transferring monitored information to a home-zone network entity.

13. The method according to Claim 11 wherein the composite waveform comprises a physical control channel with a unique scrambling code; and/or wherein the physical control channel comprises a predefined message related to a three-hop repeater identifier.

14. A communication system comprising:
a cellular network;
a Home-Zone Location Server, HZLS (202), coupled to the cellular network configured to establish presence of a subscriber in a Home-Zone, and verify and monitor call durations of a subscriber within the Home-Zone;
a Home-Zone Service Client, HZSC (204), coupled to the cellular network comprising a database wherein the HZSC is configured to collect information relating to the monitored call durations and generate billing information according to the information; and
a communication apparatus according to any of claims 1 to 6, wherein the three-hop repeater is configured to make user equipment activity information available for billing according to home-zone usage and tariffs.

## Patentansprüche

1. Kommunikationsvorrichtung, aufweisend:
einen Drei-Hop-Repeater (100),
der konfiguriert ist, um Benutzerendgerät-Übertragungen in einem Repeater-Abdeckungsbereich zu erfassen, der ein Vorhandensein von mobilen Kommunikationen an einem Heimstandort erfasst und die Dauer einer Benutzerendgerät-Aktivität in dem Repeater-Abdeckungsbereich aufzeichnet,
wobei der Drei-Hop-Repeater aufweist:
eine Benutzereinheit (104);
eine Netzwerkeinheit (102),
die kommunikativ mit der Benutzereinheit verbunden und konfiguriert ist, ein Downlink-Signal zu empfangen; und
**gekennzeichnet durch** einen NodeB-Funktionsgenerator (718), der mit mindestens einer von der Benutzereinheit (104) und der Netzwerkeinheit (102) verbunden ist, wobei der NodeB-Funktionsgenerator (718) konfiguriert ist, um eine Wellenform zu generieren,
die einen dem Drei-Hop-Repeater zugehörigen Verwürfelungscode und zur Einfügung auf dem Downlink-Signal des Drei-Hop-Repeaters enthält, um eine zusammengesetzte Wellenform zum Erfassen einer Basisstations- (106) Übertragung durch ein Benutzerendgerät zu erfassen;
wobei die Benutzereinheit (104) konfiguriert ist, um die zusammengesetzte Wellenform, die den auf dem Downlink-Signal eingefügten Verwürfelungscode enthält, an das Benutzerendgerät (108) zu übertragen.

2. Vorrichtung nach Anspruch 1, ferner aufweisend:
den Drei-Hop-Repeater, der konfiguriert ist, um Benutzerendgerät-Aktivitätsinformationen zur Fakturierung gemäß Heimbereichnutzung und Tarifen zur Verfügung zu stellen, wobei der Drei-Hop-Repeater ferner aufweist:
einen entfernbaren Flash-Speicher (310),
der mit mindestens einer von der Benutzereinheit und der Netzwerkeinheit verbunden ist, wobei der Drei-Hop-Repeater konfiguriert ist, die Benutzerendgerät-Aktivitätsinformationen auf dem entfernbaren Flash-Speicher zu speichern, der für eine Heimbereichnetzwerk-Entität zur Verarbeitung zur Verfügung gestellt werden kann.

3. Vorrichtung nach Anspruch 1, ferner aufweisend:
den Drei-Hop-Repeater, der konfiguriert ist, um Benutzerendgerät-Aktivitätsinformationen zur Fakturierung gemäß Heimbereichnutzung und Tarifen zur Verfügung zu stellen, wobei der Drei-Hop-Repeater ferner aufweist:
eine Teilnehmer-Identitätsmodul-, SIM, Karte (410, 510), die mit mindestens einer von der Benutzereinheit und der Netzwerkeinheit verbunden ist; und
Software (412, 512), die auf die SIM-Karte (410, 510) geladen und konfiguriert ist, um Benutzerendgerät-Aktivitätsinformationen zur Übertragung auf eine Heimbereichnetzwerk-Entität auf der SIM-Karte zu speichern.

4. Vorrichtung nach Anspruch 1, ferner aufweisend:
den Drei-Hop-Repeater, der konfiguriert ist, um Benutzerendgerät-Aktivitätsinformationen zur Fakturierung gemäß Heimbereichnutzung und Tarifen zur Verfügung zu stellen, wobei der Drei-Hop-Repeater ferner aufweist:
einen Bluetooth-Sender-Empfänger (616),
der mit mindestens einer von der Benutzereinheit und der Netzwerkeinheit verbunden ist; und
Software, die in Kombination mit dem Bluetooth-Sender-Empfänger betriebsfähig und konfiguriert ist, um Benutzerendgerät-Aktivitätsinformationen an ein Benutzerendgerät zu kommunizieren, das eine Funktionalität für Server- und Bluetooth-Kommunikationen des Heimbereichstandorts ausführt und die Endgerät-Aktivitätsinformationen an eine Heimbereichnetzwerk-Entität weiterleitet.

5. Vorrichtung nach Anspruch 1, ferner aufweisend:
den Drei-Hop-Repeater, der konfiguriert ist, um Benutzerendgerät-Aktivitätsinformationen zur Fakturierung gemäß Heimbereichnutzung und Tarifen zur Verfügung zu stellen, wobei der Drei-Hop-Repeater ferner aufweist:
einen Bluetooth-Sender-Empfänger (616),
der mit mindestens einer von der Benutzereinheit und der Netzwerkeinheit verbunden und konfiguriert ist, um eine Position eines Benutzerendgeräts in einem Repeater-Profil unter Verwendung eines Bluetooth-Erkennungsmodus zum Überwachen und Identifizieren von Heimbereichanrufen zu erstellen und Überwachungsinformationen an eine Heimbereichnetzwerk-Entität zu übertragen.

6. Vorrichtung nach Anspruch 1, wobei die zusammengesetzte Wellenform einen physischen Kontrollkanal mit einem eindeutigen Verwürfelungscode aufweist, und/oder wobei der physische Kontrollkanal eine vordefinierte Nachricht aufweist, die sich auf eine Drei-Hop-Repeaterkennung bezieht.

7. Verfahren zum Verwalten von Kommunikationen, das die folgenden Schritte aufweist, die von einem Drei-Hop-Repeater ausgeführt werden:
Erfassen von Benutzerendgerät- (108) Übertragungen in einem Repeater-Abdeckungsbereich des Drei-Hop-Repeaters (100);
Generieren einer Wellenform zur Einfügung auf einem Downlink-Signal des Drei-Hop-Repeaters durch einen NodeB-Funktionsgenerator des Drei-Hop-Repeaters, um eine zusammengesetzte Wellenform zum Erfassen einer Basisstations- (106) Übertragung durch ein Benutzerendgerät zu bilden, wobei eine Benutzereinheit (104) des Drei-Hop-Repeaters konfiguriert ist, um die zusammengesetzte Wellenform an das Benutzerendgerät zu übertragen, und die Wellenform einen dem Drei-Hop-Repeater zugehörigen Verwürfelungscode enthält;
Erfassen von Vorhandensein von mobilen Kommunikationen an einem Heimstandort; und Aufzeichnen der Dauer einer Benutzerendgerät-Aktivität in dem Repeater-Abdeckungsbereich.

8. Verfahren nach Anspruch 7, ferner aufweisend:
Bestimmen, ob ein Anruf in einem Heimbereich positioniert ist, aufweisend:
Betreiben eines Netzwerkknotens während des Verbindungsaufbaus, um eine Messung einer empfangenen Signalcodeleistung RSCP auf Verwürfelungscodes abzufragen, die dem Repeater zugewiesen sind;
für eine RSCP-Messung, die ausreichend stark ist, um an einem Handgerät erfasst zu werden, Melden an einen bedienenden Knoten, dass ein Anruf im Heimbereich ist; und
Informieren eines Servers des Heimbereichstandorts über dem Heimbereichanruf.

9. Verfahren nach Anspruch 7, ferner aufweisend:
Bestimmen, ob ein Anruf in einem Heimbereich positioniert ist, aufweisend:
Prüfen der empfangenen Signalcodeleistung RSCP auf von einem Repeater zugewiesenen Verwürfelungscodes an einem Handgerät;
für einen erfassten Verwürfelungscode mit vorbestimmter akzeptabler RSCP Identifizieren des Benutzerendgeräts als im Heimbereich befindlich; und
Informieren eines Servers des Heimbereichstandorts über dem Heimbereichanruf.

10. Verfahren nach Anspruch 7, ferner aufweisend:
Zuweisen von Verwürfelungscodes zu einem Repeater, aufweisend ein zufälliges Zuweisen einer Repeaterkennung zur werksseitigen festen Codierung, oder dynamisches Zuweisen von Codes, wobei ein erster heiminterner Anruf einen Verwürfelungscode identifiziert, der für den Repeater ausgewählt wurde, und eine ergänzende Repeaterkennung wird zur werksseitigen festen Codierung erstellt.

11. Verfahren nach Anspruch 7, ferner aufweisend:
zur Verfügung stellen von Benutzerendgerät-Aktivitätsinformationen zur Fakturierung gemäß Heimbereichnutzung und Tarifen; und
Speichern der Benutzerendgerät-Aktivitätsinformationen, die aus einer Gruppe ausgewählt wurden, bestehend aus:
Speichern der Benutzerendgerät-Aktivitätsinformationen auf einem entfernbaren Flash-Speicher (310), der für eine Heimbereichnetzwerk-Entität zur Verarbeitung zur Verfügung gestellt werden kann;
Speichern der Benutzerendgerät-Aktivitätsinformationen auf einer Teilnehmer-Identitätsmodul-, SIM, Karte (410, 510) für eine Übertragung auf die Heimbereichnetzwerk-Entität; und
Kommunizieren der Benutzerendgerät-Aktivitätsinformationen an ein Benutzerendgerät, das eine Funktionalität für Server- und Bluetooth-Kommunikationen des Heimbereichstandorts ausführt und die Endgerät-Aktivitätsinformationen an eine Heimbereichnetzwerk-Entität weiterleitet.

12. Verfahren nach Anspruch 7, ferner aufweisend:
Erstellen einer Position eines Benutzerendgeräts in einem Repeater-Profil unter Verwendung eines Bluetooth-Erkennungsmodus zum Überwachen und Identifizieren von Heimbereichanrufen
und
Übertragen von Überwachungsinformationen an eine Heimbereichnetzwerk-Entität.

13. Verfahren nach Anspruch 11, wobei die zusammengesetzte Wellenform einen physischen Kontrollkanal mit einem eindeutigen Verwürfelungscode aufweist, und/oder wobei der physische Kontrollkanal eine vordefinierte Nachricht aufweist, die sich auf eine Drei-Hop-Repeaterkennung bezieht.

14. Kommunikationssystem, aufweisend:
ein Mobilfunknetz;
einen Heimbereichsstandortserver HZLS (202),
der mit dem Mobilfunknetz verbunden und konfiguriert ist, um ein Vorhandensein eines Teilnehmers in einem Heimbereich festzustellen und Anrufdauern eines Teilnehmers in dem Heimbereich zu prüfen und zu überwachen;
einen Heimbereichservice-Client HZSC (204),
der mit dem Mobilfunknetz verbunden ist und eine Datenbank aufweist, wobei der HZSC konfiguriert ist, um Informationen in Bezug auf die überwachten Anrufdauern zu sammeln und den Informationen entsprechende Fakturierungsinformationen zu sammeln; und
eine Kommunikationsvorrichtung nach einem dem Ansprüche 1 bis 6, wobei der Drei-Hop-Repeater konfiguriert ist, um Benutzerendgerät-Aktivitätsinformationen zur Fakturierung gemäß Heimbereichnutzung und Tarifen zur Verfügung zu stellen.

## Revendications

1. Appareil de communication comprenant :
un répéteur à trois sauts (100) conçu pour détecter des transmissions d'équipement utilisateur dans une zone de couverture de répéteur qui détecte la présence d'une communication mobile au niveau d'un emplacement de rattachement et enregistre la durée de l'activité d'équipement utilisateur dans la zone de couverture de répéteur, le répéteur à trois sauts comprenant :
une unité utilisateur (104) ;
une unité réseau (102) couplée en communication avec l'unité utilisateur et conçue pour recevoir un signal de liaison descendante ; et
**caractérisé par** un générateur de forme d'onde (718) au noeud B couplé à au moins l'unité utilisateur (104) et l'unité réseau (102), le générateur de forme d'onde (718) au noeud B étant conçu pour générer une forme d'onde comportant un code de brouillage associé au répéteur à trois sauts et pour l'insertion du signal de liaison descendante du répéteur à trois sauts pour former une forme d'onde composite afin de détecter une transmission d'une station de base (106) par l'équipement utilisateur ;
ladite unité utilisateur (104) étant conçue pour transmettre la forme d'onde composite dont le code de brouillage inséré sur le signal de liaison descendante à l'équipement utilisateur (108).

2. Appareil selon la revendication 1 comprenant en outre :
le répéteur à trois sauts conçu afin de mettre à disposition des informations sur l'activité d'un équipement utilisateur pour la facturation selon l'utilisation et les tarifs de la zone de rattachement, le répéteur à trois sauts comprenant en outre :
une mémoire flash amovible (310) couplée à au moins une unité parmi l'unité utilisateur et l'unité réseau, ledit répéteur à trois sauts étant conçu pour enregistrer les informations sur l'activité d'un équipement utilisateur sur la mémoire flash amovible qui peut être mise à la disposition d'une entité réseau de zone de rattachement pour le traitement.

3. Appareil selon la revendication 1 comprenant en outre :
le répéteur à trois sauts conçu afin de mettre à disposition des informations sur l'activité d'un équipement utilisateur pour la facturation selon l'utilisation et les tarifs de la zone de rattachement, le répéteur à trois sauts comprenant en outre :
une carte SIM ou à module d'identification de l'abonné (410,510) couplée à au moins une unité parmi l'unité utilisateur et l'unité réseau ; et
un logiciel (412,512) chargé sur la carte SIM (410,510) conçu pour enregistrer les informations sur l'activité d'un équipement utilisateur sur la carte SIM pour le transfert à une entité réseau de zone de rattachement.

4. Appareil selon la revendication 1 comprenant en outre :
le répéteur à trois sauts conçu afin de mettre à disposition des informations sur l'activité d'un équipement utilisateur pour la facturation selon l'utilisation et les tarifs de la zone de rattachement, le répéteur à trois sauts comprenant en outre :
un émetteur-récepteur Bluetooth (616) couplé à au moins une unité parmi l'unité utilisateur et l'unité réseau ; et
un logiciel fonctionnant en combinaison avec l'émetteur-récepteur Bluetooth conçu pour communiquer les informations sur l'activité d'un équipement utilisateur à l'équipement utilisateur qui exécute une fonctionnalité de communication Bluetooth et de serveur de localisation de zone de rattachement et relaie les informations sur l'activité d'un équipement à une entité réseau de zone de rattachement.

5. Appareil selon la revendication 1 comprenant en outre :
le répéteur à trois sauts conçu afin de mettre à disposition des informations sur l'activité d'un équipement utilisateur pour la facturation selon l'utilisation et les tarifs de la zone de rattachement, le répéteur à trois sauts comprenant en outre :
un émetteur-récepteur Bluetooth (616) couplé à au moins une unité parmi l'unité utilisateur et l'unité réseau conçu pour établir l'emplacement d'un équipement utilisateur dans une empreinte de répéteur à l'aide d'un mode découverte Bluetooth pour surveiller et identifier les appels de zone de rattachement, et transférer les informations surveillées à une entité réseau de zone de rattachement.

6. Appareil selon la revendication 1, ladite forme d'onde composite comprenant un canal de commande physique avec un code de brouillage unique ; et/ou ledit canal de commande physique comprenant un message prédéterminé relatif à un identifiant de répéteur à trois sauts.

7. Procédé de gestion de communication comprenant les étapes suivantes exécutées par un répéteur à trois sauts :
la détection de transmission d'un équipement utilisateur (108) dans une zone de couverture de répéteur du répéteur à trois sauts (100) ;
la génération par un générateur de forme d'onde au noeud B de répéteur à trois sauts d'une forme d'onde pour l'insertion sur un signal de liaison descendante de répéteur à trois sauts pour former une forme d'onde composite afin de détecter une transmission d'une station de base (106) par un équipement utilisateur, une unité utilisateur (104) du répéteur à trois sauts étant conçue pour transmettre la forme d'onde composite à l'équipement utilisateur et la forme d'onde comportant un code de brouillage associé au répéteur à trois sauts ;
la détection de la présence d'une communication mobile au niveau d'un emplacement de rattachement ; et
l'enregistrement de la durée de l'activité d'équipement utilisateur dans la zone de couverture de répéteur.

8. Procédé selon la revendication 7 comprenant en outre :
la détermination pour savoir si un appel se trouve dans une zone de rattachement comprenant :
pendant l'établissement d'appel, l'exploitation d'un noeud de réseau pour demander la mesure d'une puissance de code de signal reçu, ou PCSR, sur des codes de brouillage attribués à un répéteur ;
pour la mesure d'une PCSR suffisamment forte pour être détectée au niveau d'un combiné, le signalement à un noeud de desserte qu'un appel est d'une zone de rattachement ; et
le signalement à un serveur de localisation de zone de rattachement de l'appel de zone de rattachement.

9. Procédé selon la revendication 7 comprenant en outre :
la détermination pour savoir si un appel se trouve dans une zone de rattachement comprenant :
au niveau d'un combiné, la vérification de la puissance de code de signal reçu, PCSR, sur des codes de brouillage attribués à un répéteur ;
pour un code de brouillage détecté avec une PCSR prédéfinie acceptable, l'identification d'un équipement utilisateur comme se trouvant dans une zone de rattachement ; et
le signalement à un serveur de localisation de zone de rattachement de l'appel de zone de rattachement.

10. Procédé selon la revendication 7 comprenant en outre :
l'attribution d'un code de brouillage à un répéteur comprenant l'attribution aléatoire d'une identité de répéteur pour le codage en dur d'usine ou l'attribution dynamique de codes, un premier appel domestique identifiant un code de brouillage choisi pour le répéteur et une identité de répéteur complémentaire étant établie pour le codage en dur d'usine.

11. Procédé selon la revendication 7 comprenant en outre :
la mise à disposition d'informations sur l'activité d'un équipement utilisateur pour la facturation selon l'utilisation et les tarifs de la zone de rattachement ; et
l'enregistrement des informations sur l'activité d'un équipement utilisateur choisi dans le groupe constitué par :
l'enregistrement des informations sur l'activité d'un équipement utilisateur sur une mémoire flash amovible (310) qui peut être mise à la disposition d'une entité réseau de zone de rattachement pour le traitement ;
l'enregistrement des informations sur l'activité d'un équipement utilisateur sur une carte SIM ou à module d'identification de l'abonné (410,510) pour le transfert à une entité réseau de zone de rattachement ; et
la communication des informations sur l'activité d'un équipement utilisateur à un équipement utilisateur qui exécute une fonctionnalité de communication Bluetooth et de serveur de localisation de zone de rattachement et relaie les informations sur l'activité d'un équipement à une entité réseau de zone de rattachement.

12. Procédé selon la revendication 7 comprenant en outre :
l'établissement de l'emplacement d'un équipement utilisateur dans une empreinte de répéteur à l'aide d'un mode découverte Bluetooth pour surveiller et identifier les appels de zone de rattachement ; et transférer les informations surveillées à une entité réseau de zone de rattachement.

13. Procédé selon la revendication 11, ladite forme d'onde composite comprenant un canal de commande physique avec un code de brouillage unique ; et/ou ledit canal de commande physique comprenant un message prédéfini relatif à un identifiant de répéteur à trois sauts.

14. Système de communication comprenant :
un réseau cellulaire ;
un serveur de localisation de zone de rattachement ou HZLS (202) couplé au réseau cellulaire conçu pour établir la présence d'un abonné dans une zone de rattachement, et vérifier et surveiller les durées d'appels d'un abonné au sein de la zone de rattachement ;
un client de services de zone de rattachement ou HZSC (204) couplé au réseau cellulaire comprenant une base de données, ledit HZSC étant conçu pour recueillir des informations concernant les durées d'appels surveillées et générer des informations de facturation selon les informations ; et
un appareil de communication selon l'une quelconque des revendications 1 à 6, ledit répéteur à trois sauts étant conçu afin de mettre à disposition des informations sur l'activité d'un équipement utilisateur pour la facturation selon l'utilisation et les tarifs de la zone de rattachement.
